# EUROPÄISCHE PATENTANMELDUNG

(11) **EP 4 187 686 A1**
(43) Veröffentlichungstag der Anmeldung: **31.05.2023**
(21) Anmeldenummer: 22204095.8
(22) Anmeldetag: 27.10.2022
(51) Int. Cl.: H01M 50/105, H01M 10/04, B29C 65/22, B29C 65/00

(54) **SIEGELWERKZEUG ZUM THERMISCHEN SIEGELN EINER BATTERIEZELLENHÜLLE UND BATTERIEZELLE**

(30) Priorität: 30.11.2021 DE 102021213570
(71) Anmelder: ROPEX Industrie-Elektronik GmbH, 74321 Bietigheim-Bissingen (DE)
(72) Erfinder: NUDING, Oliver, 74391 Erligheim (DE)
(74) Vertreter: Patentanwälte Magenbauer & Kollegen Partnerschaft mbB

(57) **Zusammenfassung**

Die Erfindung betrifft ein Siegelwerkzeug (1) zum thermischen Siegeln einer Batteriezellenhülle (43), mit einem ersten Werkzeugteil (2), das einen gestaltfesten Grundkörper (3) umfasst, an dem eine bandförmige, insbesondere rechteckige, Stützfläche (9) ausgebildet ist, wobei eine Länge (10) der Stützfläche (9) ein Mehrfaches einer Breite (11) der Stützfläche (9) beträgt und wobei die Stützfläche (9) mit einer Ausgleichsschicht (23) aus einem gummielastischen Material versehen ist und an einer dem Grundkörper (3) abgewandten Siegelfläche (24) der Ausgleichsschicht (23) ein Widerstandsheizband (14) aufliegt, das längs der Stützfläche (9) erstreckt ist und jeweils endseitig am Grundkörper (3) festgelegt ist. Erfindungsgemäß sind an der Stützfläche (9) eine erste Vertiefung (17) und eine zweite Vertiefung (18) ausgebildet, die jeweils über die Breite (11) der Stützfläche (9) erstreckt sind und die beabstandet zueinander angeordnet sind.

## Beschreibung

Die Erfindung betrifft ein Siegelwerkzeug zum thermischen Siegeln einer Batteriezellenhülle, mit einem ersten Werkzeugteil, das einen gestaltfesten Grundkörper umfasst, an dem eine bandförmige, insbesondere rechteckige, Stützfläche ausgebildet ist, wobei eine Länge der Stützfläche ein Mehrfaches einer Breite der Stützfläche beträgt und wobei die Stützfläche mit einer Ausgleichsschicht aus einem gummielastischen Material versehen ist und an einer dem Grundkörper abgewandten Siegelfläche der Ausgleichsschicht ein Widerstandsheizband aufliegt, das längs der Stützfläche erstreckt ist und jeweils endseitig am Grundkörper festgelegt ist. Ferner betrifft die Erfindung eine Batteriezelle.

Aus dem Produktprogramm der Anmelderin sind Siegelwerkzeuge bekannt, mit denen Kunststofffolienlagen im Zuge eines Siegelvorgangs stoffschlüssig miteinander verbunden werden können, wobei hierzu entlang der vorgesehenen Siegelnaht ein lokales Aufschmelzen der miteinander zu verbindenden Kunststofffolienlagen durchgeführt wird. Die Wärmeenergie für diesen Siegelvorgang wird von wenigstens einem Widerstandsheizband, das von einem elektrischen Strom durchflossen wird und dabei aufgrund seines definierten elektrischen Widerstands eine gezielte Wärmeabgabe in die Kunststofffolienlagen ermöglicht, bereitgestellt. Um eine gezielte Einkopplung der vom Widerstandsheizband bereitgestellten Wärmeenergie in die miteinander zu verbindenden Kunststofffolienlagen zu gewährleisten, ist eine Einleitung einer Druckkraft auf die miteinander zu verbindenden Kunststofffolienlagen im Bereich der Siegelnaht vorgesehen. Hierbei wird das Widerstandsheizband von einer gummielastischen, thermisch stabilen Ausgleichsschicht abgestützt, wobei die Oberfläche dieser Ausgleichsschicht, auf der das Widerstandsheizband aufliegt, auch als Siegelfläche bezeichnet werden kann. Die typischerweise als Silikonschicht ausgebildete Ausgleichsschicht ist ihrerseits auf eine Stützfläche eines gestaltfesten, insbesondere aus Aluminium oder Stahl hergestellten, Grundkörpers aufgebracht.

Beispielhaft ist der Grundkörper plattenförmig bzw. quaderförmig geformt, wobei die Stützfläche üblicherweise an einer längeren Schmalseite des Grundkörpers ausgebildet ist. Die aus dem Widerstandsheizband, der Ausgleichsschicht und dem Grundkörper gebildete Baugruppe kann auch als erstes Werkzeugteil bezeichnet werden. Da die, häufig rechteckig ausgebildete, Stützfläche bezogen auf ihre Längenausdehnung üblicherweise eine geringe Breitenausdehnung aufweist, wobei eine Länge der Stützfläche ein Mehrfaches einer Breite der Stützfläche beträgt, kann eine Geometrie der Stützfläche auch als bandförmig bezeichnet werden.

Das Widerstandsheizband ist abseits der Stützfläche jeweils endseitig am Grundkörper festgelegt, hierzu werden in Abhängigkeit vom Anwendungsfall für das Siegelwerkzeug auch sogenannte Spannköpfe eingesetzt, mit denen das Widerstandsheizband unter einer definierten Spannung gehalten werden kann.

Um die gewünschte Druckkraft auf die Siegelnaht einleiten zu können, ist ferner ein zweites Werkzeugteil vorzusehen, das gegenüberliegend zum ersten Werkzeugteil angeordnet ist und mit dem ersten Werkzeugteil einen größenvariablen Siegelspalt ausbildet, in den die zu siegelnden Kunststofffolienlagen für den Siegelvorgang eingebracht werden. Hierzu kann vorgesehen sein, das wenigstens eines der beiden Werkzeugteile mit einer Antriebseinrichtung gekoppelt ist, mit der ein Abstand zwischen dem ersten Werkzeugteil und dem zweiten Werkzeugteil eingestellt werden kann und mit dem eine Krafteinleitung zwischen dem ersten Werkzeugteil und dem zweiten Werkzeugteil zur Bereitstellung der Druckkraft ermöglicht wird.

Die Aufgabe der Erfindung besteht darin, ein Siegelwerkzeug zur Herstellung einer verbesserten Siegelnaht sowie eine Batteriezelle mit einer verbesserten Siegelnaht bereitzustellen.

Diese Aufgabe wird für ein Siegelwerkzeug der eingangs genannten Art dadurch gelöst, dass an der Stützfläche eine erste Vertiefung und eine zweite Vertiefung ausgebildet sind, die jeweils über die Breite der Stützfläche erstreckt sind und die beabstandet zueinander angeordnet sind. Die erste Vertiefung und die zweite Vertiefung ermöglichen die Anordnung und stoffschlüssige Anbindung zusätzlicher Komponenten in der Siegelnaht zwischen den beiden Kunststofffolienlagen, wobei eine Geometrie der ersten Vertiefung an einen ersten Querschnitt einer ersten Komponente und eine zweite Geometrie der zweiten Vertiefung an einen Querschnitt der zweiten Komponente angepasst ist. Bei diesen Komponenten kann es sich beispielsweise um plattenförmig ausgebildete Elektroden handeln, die zur Schaffung einer elektrisch leitenden Verbindung zwischen einem von den miteinander zu verbindenden Kunststofffolienlagen begrenzten taschenförmigen Innenvolumen und einer Umgebung vorgesehen sind, wie dies beispielsweise bei Batteriezellen der Fall ist. Durch die Berücksichtigung des Querschnitts der jeweiligen Komponente wird während der Durchführung des Siegelvorgangs eine zumindest nahezu vollständig gleichmäßige Flächenpressung über die gesamte Siegelnaht ermöglicht, so dass es nicht zu lokalen Verdrängungseffekten aufgrund von geometrischen Überschneidungen zwischen dem ersten Werkzeugteil und den beiden Kunststofffolienlagen mit den eingefügten Komponenten kommt. Dementsprechend wird hiermit die Schaffung einer hoch belastbaren Siegelnaht ohne Schwächungszonen begünstigt. Vorzugsweise ist das erste Werkzeugteil zur Verwendung bei der Herstellung von Batteriezellen vorgesehen, so dass die erste Vertiefung die Berücksichtigung eines Volumens einer ersten Elektrode, beispielsweise eines Pluspols der Batteriezelle, ermöglicht während die zweite Vertiefung die Berücksichtigung eines Volumens einer zweiten Elektrode, beispielsweise eines Minuspols, der Batteriezelle, ermöglicht. Hierbei kann vorgesehen sein, dass der erste Querschnitt der ersten Komponente und der zweite Querschnitt der zweiten Komponente unterschiedlich zueinander ausgebildet sind. Typischerweise ist jedoch vorgesehen, dass der erste Querschnitt und der zweite Querschnitt identisch sind.

Die jeweilige Kunststofffolienlage kann aus einer oder mehreren Schichten aufgebaut sein, wobei im Fall eines mehrschichtigen Aufbaus auch unterschiedliche Kunststoffmaterialien zum Einsatz kommen können.

Vorteilhafte Weiterbildungen der Erfindung sind Gegenstand der Unteransprüche.

Zweckmäßig ist es, wenn eine erste Länge der ersten Vertiefung und/oder eine zweite Länge der zweiten Vertiefung größer als die Breite der Stützfläche ausgebildet sind. Hierbei wird davon ausgegangen, dass die erste Länge der ersten Vertiefung und die zweite Länge der zweiten Vertiefung jeweils in Richtung einer längsten Kante der Stützfläche bzw. Siegelfläche ermittelt werden. Ferner wird davon ausgegangen, dass eine Breite des Widerstandsheizbands geringer als die Breite der Stützfläche gewählt ist und dass die in die Siegelnaht stoffschlüssig einzufügenden Komponenten in Richtung der längsten Kante der Stützfläche bzw. Siegelfläche eine Erstreckung aufweist, die größer, insbesondere erheblich größer, als die Breite der Stützfläche ist.

Bevorzugt ist vorgesehen, dass eine erste Grundfläche der ersten Vertiefung und eine zweite Grundfläche der zweiten Vertiefung jeweils eben ausgebildet sind. Hiermit werden die typischerweise als Planparallelplatten, insbesondere aus einem metallischen Bandmaterial, ausgeführten Elektroden bei Batteriezellen berücksichtigt.

Bei einer Weiterbildung der Erfindung ist vorgesehen, dass die Stützfläche eben ausgebildet ist und dass die erste Grundfläche und die zweite Grundfläche in einer gemeinsamen Ebene und/oder parallel zur Stützfläche ausgerichtet sind. Hierbei wird davon ausgegangen, dass die typischerweise zwei Elektroden von Batteriezellen, die mit dem ersten Werkzeugteil und einem zugehörigen zweiten Werkzeugteil zwischen den beiden Kunststofffolienlagen eingeschweißt werden sollen, jeweils die gleiche Dicke aufweisen und sich allenfalls in ihrer Erstreckung in Richtung der längsten Kante der Stützfläche voneinander unterscheiden.

In weiterer Ausgestaltung der Erfindung ist vorgesehen, dass eine erste Schichtdicke, mit der die Ausgleichsschicht auf die Stützfläche aufgebracht ist, kleiner oder gleich einer zweiten Schichtdicke ist, mit der die Ausgleichsschicht auf der ersten und der zweiten Grundfläche aufgebracht ist. Hierdurch kann berücksichtigt werden, dass im Bereich der beiden Vertiefungen zusätzlich zu den Toleranzen der beiden miteinander zu verbindenden Kunststofffolienlagen auch noch die Toleranzen der zwischen die beiden Kunststofffolienlagen einzubringen den Komponenten, beispielsweise Elektroden, zu berücksichtigen sind. Dementsprechend ist es vorteilhaft, wenn in diesen Bereichen eine identische oder gegebenenfalls höhere Elastizität der Ausgleichsschicht verwirklicht wird.

Vorteilhaft ist es, wenn das Widerstandsheizband eine Länge aufweist, die eine spannungslose Auflage des Widerstandsheizbands auf der Stützfläche und der ersten und zweiten Grundfläche ermöglicht. Hiermit wird gewährleistet, dass sich das Widerstandsheizband während der Durchführung des Siegelvorgangs an die Geometrie der Stützfläche und der darin vorgesehenen Vertiefungen anschmiegen kann, ohne dass es beispielsweise in konkaven Übergangsbereichen zwischen Stützfläche und Vertiefung zu einem Abstand zwischen dem Widerstandsheizband und der Ausgleichsschicht kommt, durch den ein undefinierter Querschnitt für den zu siegelnden Bereich auftreten könnte. Da davon ausgegangen werden muss, dass das Widerstandsheizband einen minimalen Biegeradius aufweist, der größer Null ist, kann zusätzlich vorgesehen sein, dass Übergangsbereiche zwischen Stützfläche und Vertiefung abgerundet oder zumindest abgeschrägt ausgebildet sind.

Zweckmäßig ist es, wenn ein zweites Werkzeugteil gegenüberliegend zum ersten Werkzeugteil angeordnet ist, das in gleicher Weise wie das erste Werkzeugteil ausgebildet ist und das mit dem ersten Werkzeugteil einen größenvariablen Siegelspalt ausbildet. Hierdurch kann eine Siegelnaht geschaffen werden, die spiegelsymmetrisch zu einer Spiegelebene ausgebildet ist, wobei eine Flächennormale dieser Spiegelebene parallel zu einem Abstand zwischen dem ersten Werkzeugteil und dem zweiten Werkzeugteil ausgerichtet ist.

Bevorzugt ist vorgesehen, dass ein minimaler Abstand zwischen den Siegelflächen der gegenüberliegen Siegelwerkzeuge einer Dicke einer Siegelnaht für zwei miteinander verbundene Kunststofffolienlagen einer Batteriezelle entspricht und dass ein minimaler Abstand zwischen den mit der Ausgleichsschicht versehenen Grundflächen der Vertiefungen der gegenüberliegenden Siegelwerkzeuge einer Dicke einer Siegelnaht entspricht, in der zwischen zwei Kunststofffolienlagen eine, insbesondere mit einer Kunststoffummantelung versehene, elektrisch leitende Elektrode aufgenommen ist.

In weiterer Ausgestaltung der Erfindung ist vorgesehen, dass der Grundkörper, die Ausgleichsschicht und das Widerstandsheizband für eine Durchführung eines Impulssiegelverfahrens ausgebildet sind. Bei einem Impulssiegelverfahren wird in ihnen durch eine zeitlich begrenzte Stromzufuhr in das jeweilige Widerstandsheizband eine kurzfristige Erwärmung der angrenzend an das Widerstandsheizband aufliegenden Kunststofffolienlagen bewirkt, daran schließt sich eine Abkühlungsphase ein, bei der keine weitere Stromzufuhr in das jeweilige Widerstandsheizband vorgenommen wird.

Die Aufgabe der Erfindung wird für eine Batteriezelle dadurch gelöst, dass die Batteriezelle eine Batteriezellenhülle aufweist, die eine erste Kunststofffolienlage und eine zweite Kunststofffolienlage umfasst, wobei die erste Kunststofffolienlage und die zweite Kunststofffolienlage im Bereich einer randseitig umlaufenden Siegelnaht zu einer geschlossenen Tasche verschweißt sind und wobei die Siegelnaht von zwei zwischen der ersten Kunststofffolienlage und der zweiten Kunststofffolienlage angeordneten Elektroden durchsetzt ist, die jeweils als elektrisch leitende Bandabschnitte ausgebildet sind, dadurch gekennzeichnet, dass eine erste Schichtdicke der ersten Kunststofffolienlage und eine Schichtdicke der zweiten Kunststofffolienlage längs der Siegelnaht konstant sind. Vorzugsweise ist vorgesehen, dass die Batteriezellenhülle eine rechteckige Geometrie aufweist und dass die beiden Elektroden gemeinsam an einer der vier Seitenkanten der Batteriezellenhülle angeordnet sind. In diesem Fall kann beispielhaft vorgesehen werden, dass in einem ersten Schritt die beiden Kunststofffolienlagen an denjenigen Seitenkanten mit einem konventionellen Siegelwerkzeug stoffschlüssig miteinander verbunden werden, an denen keine Elektroden angeordnet sind. In einem nachfolgenden Schritt können dann die Batterieplatten, die jeweils mit einer Elektrode versehen sind, in der taschenartigen Ausnehmung zwischen den beiden Kunststofffolienlagen aufgenommen werden und ein Füllvorgang für die taschenartigen Ausnehmung, beispielsweise mit einem Elektrolyt, vorgenommen werden. Anschließend erfolgt die abdichtende Siegelung der vierten Seitenkante, wobei hier die Siegelnaht von den beiden Elektroden durchsetzt wird und zur Durchführung des Siegelvorgangs ein erfindungsgemäßes Siegelwerkzeug verwendet werden kann.

Eine vorteilhafte Ausführungsform der Erfindung ist in der Zeichnung dargestellt. Hierbei zeigt
- Figur 1: eine schematische und nicht maßstäbliche Seitenansicht eines ersten Werkzeugteils eines Siegelwerkzeugs,
- Figur 2: eine schematische und nicht maßstäbliche Draufsicht auf das erste Werkzeugteil des Siegelwerkzeugs,
- Figur 3: eine schematische und nicht maßstäbliche Draufsicht auf eine Batteriezelle und
- Figur 4: eine schematische und nicht maßstäbliche Seitenansicht der zwischen dem ersten Werkzeugteil und einem zweiten Werkzeugteil während des Siegelvorgangs aufgenommenen Batteriezelle.

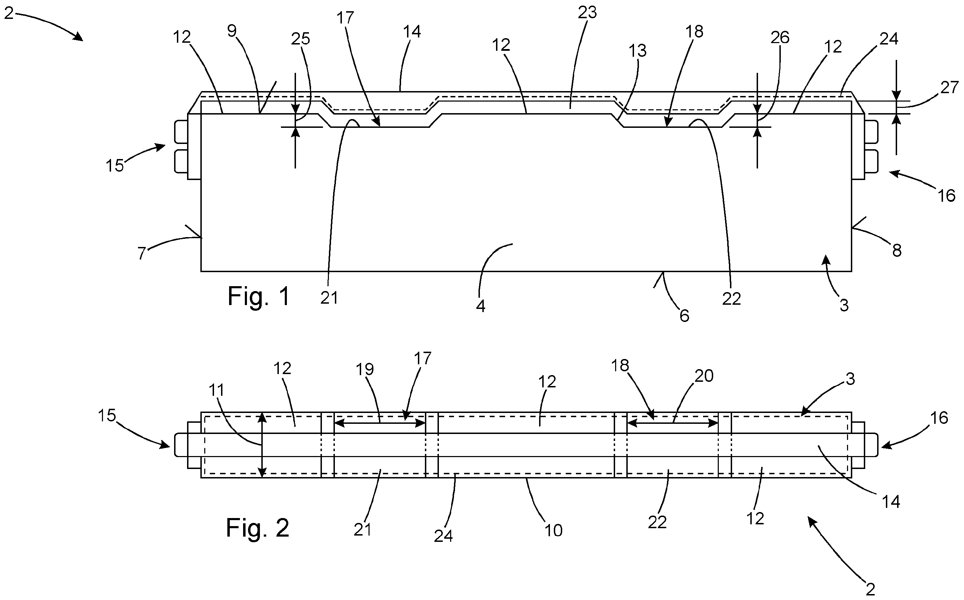

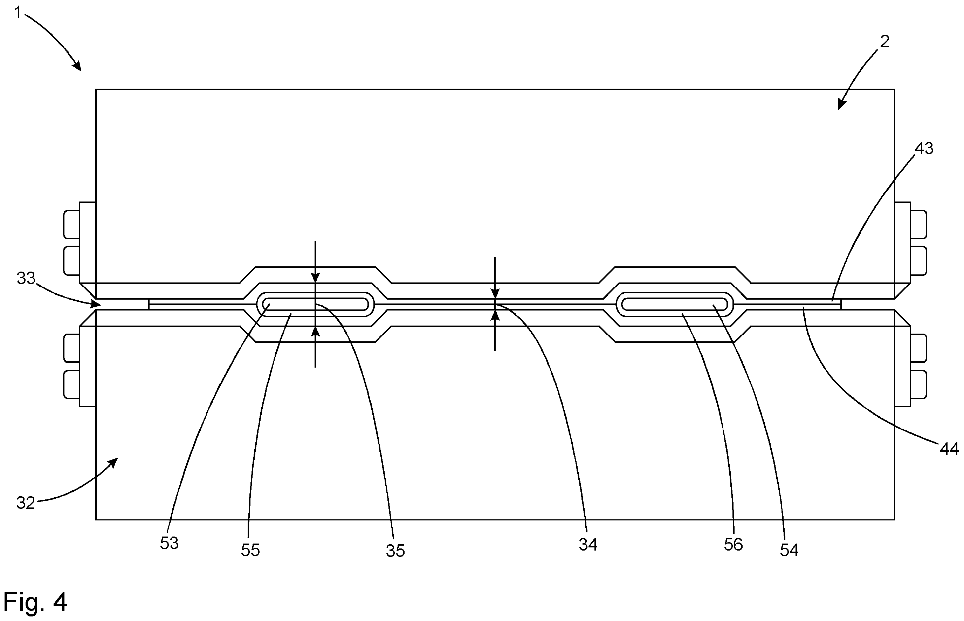

Ein in der Figur 1 schematisch dargestelltes erstes Werkzeugteil 2 eines in der Figur 4 gezeigten Siegelwerkzeugs 1 umfasst einen gestaltfesten Grundkörper 3. Beispielhaft ist der Grundkörper 3 im Wesentlichen quaderförmig ausgebildet und umfasst eine in der Darstellungsebene der Figur 1 angeordnete und eben ausgebildete erste Seitenfläche 4. Angrenzend an die erste Seitenfläche 4 weist der Grundkörper 3 eine erste Stirnfläche 6, eine zweite Stirnfläche 7 sowie eine dritte Stirnfläche 8 auf, die jeweils eben ausgebildet sind. Ferner grenzt an die erste Seitenfläche 4 eine vierte Stirnfläche 9 an, die auch als Stützfläche bezeichnet wird und die abweichend von den übrigen Stirnflächen 6 bis 8 mit einer in der Figur 1 erkennbaren Profilierung versehen ist.

Die Profilierung der vierten Stirnfläche 9 wird von einer ersten Vertiefung 17 und von einer zweiten Vertiefung 18 bestimmt, die jeweils gleichartig ausgebildet sind und die ausgehend von einer Oberfläche 12 der vierten Stirnfläche 9 in den Grundkörper 3 eingebracht sind. Sowohl die erste Vertiefung 17 als auch die zweite Vertiefung 18 erstrecken sich gemäß der Darstellung der Figur 2 über eine gesamte Breite 11 des Grundkörpers 3 und weisen eine eben ausgebildete erste Grundfläche 21 bzw. eine eben ausgebildete zweite Grundfläche 22 auf.

Eine Länge 19 der ersten Vertiefung 17 und eine Länge 20 der zweiten Vertiefung 18 in Richtung einer längsten Kante 10 des Grundkörpers 3 ist ungefähr einen Faktor 2 größer als die die Breite 11 des Grundkörpers 3. Eine erste Tiefe 25 der ersten Vertiefung 17 und eine zweite Tiefe 26 der zweiten Vertiefung 18 sind rein exemplarisch gleich gewählt, so dass die Grundflächen 21 und 22 nicht nur parallel zueinander ausgerichtet sind, sondern vielmehr in einer gemeinsamen, nicht näher bezeichneten Ebene angeordnet sind. Beispielhaft ist vorgesehen, dass zwischen der Oberfläche 12 und den jeweiligen Grundfläche 21, 22 eine auch als Fase bezeichnete Schrägfläche 13 vorgesehen ist, um eine zu starke Abwinklung des Widerstandsheizbands 14 während der Durchführung des Siegelvorgangs zu verhindern.

Wie aus der Figur 1 weiterhin erkennbar ist, erstreckt sich das Widerstandsheizband 14 ausgehend von der zweiten Stirnfläche 7 bis zur dritten Stirnfläche 8 und ist jeweils endseitig mit einem ersten Befestigungsmittel 15 an der zweiten Stirnfläche 7 bzw. endseitig mit einem zweiten Befestigungsmittel 16 an der dritten Stirnfläche 8 festgelegt.

Auf die vierte Stirnfläche 9 ist eine Ausgleichsschicht 23 aufgebracht, die aus einem gummielastischen Material, insbesondere einem Silikonmaterial, hergestellt ist. Die Aufgabe dieser Ausgleichsschicht 23 liegt darin, geringfügige Dickenabweichungen der miteinander zu verarbeitenden Komponenten, beispielsweise der Komponenten der nachstehend näher beschriebenen Batteriezelle 41, auszugleichen. Eine dem Grundkörper 3 abgewandte Oberfläche der Ausgleichsschicht 23 wird auch als Siegelfläche 24 bezeichnet. Exemplarisch ist vorgesehen, dass eine erste Schichtdicke 27 der Ausgleichsschicht 23 im Bereich der Oberfläche 12 sowie eine zweite Schichtdicke 28 der Ausgleichsschicht 23 im Bereich der beiden Vertiefungen 17, 18 jeweils identisch ist, so dass auch eine Nachgiebigkeit des ersten Werkzeugteils 2 über seine gesamte Länge 10 weitgehend identisch ist.

Wie aus der Darstellung der Figur 2 entnommen werden kann, überdeckt die Ausgleichsschicht 23 die vierte, in der Draufsicht rechteckige, Stirnfläche 9 vollständig, während das Widerstandsheizband 14 mittig über die Stirnfläche 9 verläuft und eine geringere Breite als der Grundkörper 3 aufweist.

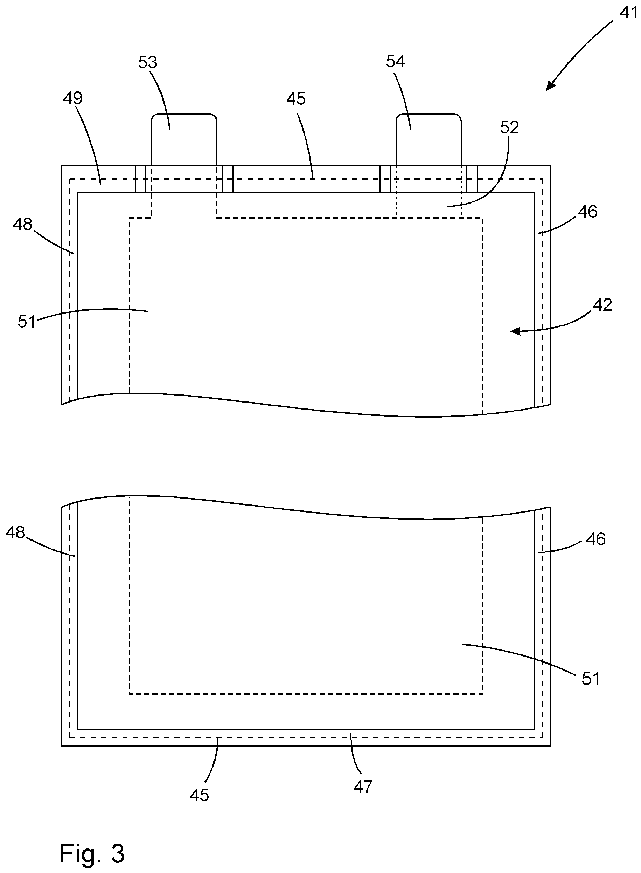

In der Darstellung der Figur 3 ist eine Batteriezelle 41 schematisch dargestellt, die eine taschenförmig ausgebildete Batteriezellenhülle 42 umfasst. Beispielhaft ist die Batteriezellenhülle 42 aus zwei jeweils rechteckigen Kunststofffolienlagen 43, 44 gebildet, die randseitig abdichtend stoffschlüssig miteinander verbunden sind und die damit eine Vorderseite und einer Rückseite der Batteriezellenhülle 42 bilden.

Hierzu sind die beiden Kunststofffolienlagen 43, 44 mit einer umlaufenden Siegelnaht 45 verbunden. Diese Siegelnaht 45 umfasst rein exemplarisch insgesamt vier jeweils geradlinig ausgeführte Siegelnahtabschnitte 46, 47, 48 und 49. Hierbei ist vorgesehen, die beiden Kunststofffolienlagen 43, 44 zunächst im Bereich der Siegelnahtabschnitte 46, 47 und 48 mit konventionellen, nicht dargestellten Siegelwerkzeugen stoffschlüssig miteinander zu verbinden und anschließend durch die noch bestehende Öffnung der Batteriezellenhülle 42 die rein exemplarisch vorgesehenen ersten und zweiten Batterieplatten 51, 52 in die Batteriezellenhülle 42 einzuschieben. Anschließend kann eine Befüllung des taschenförmig ausgebildeten Innenraums der Batteriezellenhülle 42 mit einem flüssigen oder gelförmigen Elektrolyt erfolgen. Nachfolgend wird die Batteriezellenhülle 42 durch einen Siegelvorgang, mit dem die vierte Siegelnaht 49 unter Verwendung des in der Figur 4 gezeigten Siegelwerkzeugs 1 hergestellt wird. Hierbei durchsetzen eine mit der ersten Batterieplatte 51 verbundene erste Elektroden sowie eine mit der zweiten Batterieplatte 52 verbundene zweite Elektrode 54 die Siegelnaht 45 im Bereich des vierten Siegelnahtabschnitts 49.

Bei dem in der Figur 4 gezeigten Siegelwerkzeug 1 ist neben dem bereits beschriebenen ersten Werkzeugteil 2 ein zweites Werkzeugteil 32 vorgesehen, das identisch mit dem ersten Werkzeugteil 2 ist und spiegelbildlich zum ersten Werkzeugteil 2 angeordnet ist. Dem ersten Werkzeugteil 2 und dem zweiten Werkzeugteil 32 ist eine nicht dargestellte Antriebseinrichtung zugeordnet, mit der ein Abstand zwischen dem ersten Werkzeugteil 2 und dem zweiten Werkzeugteil 32 eingestellt werden kann, wobei zwischen dem ersten Werkzeugteil 2 und dem zweiten Werkzeugteil 32 ein größenvariabler Siegelspalt 33 ausgebildet ist.

In der Darstellung der Figur 4 ist diejenige Stellung gezeigt, die das erste Werkzeugteil 2 gegenüber dem zweiten Werkzeugteil 32 Zeitpunkt der Durchführung des Siegelvorgangs für den vierten Siegelnahtabschnitt 49 einnimmt. Hierbei ist ein erster Abstand 34 zwischen der Oberfläche 12 des ersten Werkzeugteil 2 und der Oberfläche 12 des zweiten Werkzeugteils 32 derart gewählt, dass die jeweiligen Ausgleichsschichten 23 elastisch deformiert werden und die gewünschte Krafteinleitung auf die aufeinander aufliegenden ersten und zweiten Kunststofffolienlagen 43, 44 ausüben.

Ferner ist ein zweiter Abstand 35 zwischen der ersten Grundfläche 21 des ersten Werkzeugteils 2 und der ersten Grundfläche 21 des zweiten Werkzeugteils 32 bzw. zwischen der zweiten Oberfläche 22 des ersten Werkzeugteils 2 und der zweiten Grundfläche 22 des zweiten Werkzeugteils 32 derart bemessen, dass ein Verbund aus den beiden Kunststofffolienlagen 43, 44, der ersten Elektrode 53 bzw. der zweiten Elektrode 54 und einer der ersten Elektrode 53 zugehörigen, aus Kunststofffolie gebildeten, ersten Elektrodenummantelung 55 bzw. eine der zweiten Elektrode 54 zugehörigen, aus Kunststofffolie gebildeten, Elektrodenummantelung 56 mit einer identischen oder zumindest ähnlichen Flächenpressung beaufschlagt wird, wie dies im Bereich der einander gegenüberliegenden Oberflächen 12 der Fall ist.

Der erste Abstand 34 im Siegelspalt 33 ist derart bemessen, dass er geringfügig kleiner als eine Summe einer ersten Schichtdicke der ersten Kunststofffolienlage 43 und einer zweiten Schichtdicke der zweiten Kunststofffolienlage 44 ist.

Ferner ist der zweite Abstand 35 im Siegelspalt 33 derart bemessen, dass er geringfügig kleiner als eine Summe der ersten Schichtdicke der ersten Kunststofffolienlage 43, der zweiten Schichtdicke der zweiten Kunststofffolienlage 44, einer Dicke der ersten bzw. zweiten Elektrode 53, 54 sowie einer zweifachen Dicke der ersten bzw. zweiten Elektrodenummantelung 55, 56 ist.

Ferner ist eine Länge des gemäß der Figur 1 nur lose auf der vierten Stirnfläche 9 aufliegenden Widerstandsheizbands 14 derart bemessen, dass das Widerstandsheizband 14 zumindest nahezu spannungsfrei auf der durch die Oberflächen 12 und die Vertiefungen 17, 18 gebildeten Profilierung aufliegt und somit die gewünschte gleichförmige Flächenpressung über die gesamte Länge des vierten Siegelnahtabschnitts 49 sichergestellt ist.

## Patentansprüche

1. Siegelwerkzeug (1) zum thermischen Siegeln einer Batteriezellenhülle (43), mit einem ersten Werkzeugteil (2), das einen gestaltfesten Grundkörper (3) umfasst, an dem eine bandförmige, insbesondere rechteckige, Stützfläche (9) ausgebildet ist, wobei eine Länge (10) der Stützfläche (9) ein Mehrfaches einer Breite (11) der Stützfläche (9) beträgt und wobei die Stützfläche (9) mit einer Ausgleichsschicht (23) aus einem gummielastischen Material versehen ist und an einer dem Grundkörper (3) abgewandten Siegelfläche (24) der Ausgleichsschicht (23) ein Widerstandsheizband (14) aufliegt, das längs der Stützfläche (9) erstreckt ist und jeweils endseitig am Grundkörper (3) festgelegt ist, **dadurch gekennzeichnet, dass** an der Stützfläche (9) eine erste Vertiefung (17) und eine zweite Vertiefung (18) ausgebildet sind, die jeweils über die Breite (11) der Stützfläche (9) erstreckt sind und die beabstandet zueinander angeordnet sind.

2. Siegelwerkzeug (1) nach Anspruch 1, **dadurch gekennzeichnet, dass** eine erste Länge (19) der ersten Vertiefung (17) und/oder eine zweite Länge (20) der zweiten Vertiefung (18) größer als die Breite (11) der Stützfläche (9) ausgebildet sind.

3. Siegelwerkzeug (1) nach Anspruch 1 oder 2, **dadurch gekennzeichnet, dass** eine erste Grundfläche (21) der ersten Vertiefung (17) und eine zweite Grundfläche (22) der zweiten Vertiefung (18) jeweils eben ausgebildet sind.

4. Siegelwerkzeug (1) nach Anspruch 3, **dadurch gekennzeichnet, dass** die Stützfläche (9) eben ausgebildet ist und dass die erste Grundfläche (21) und die zweite Grundfläche (22) in einer gemeinsamen Ebene und/oder parallel zur Stützfläche (9) ausgerichtet sind.

5. Siegelwerkzeug (1) nach Anspruch 3 oder 4, **dadurch gekennzeichnet, dass** eine erste Schichtdicke (27), mit der die Ausgleichsschicht (23) auf die Stützfläche (9) aufgebracht ist, kleiner oder gleich einer zweiten Schichtdicke (28) ist, mit der die Ausgleichsschicht (23) auf der ersten und der zweiten Grundfläche (21, 22) aufgebracht ist.

6. Siegelwerkzeug (1) nach einem der vorhergehenden Ansprüche, **dadurch gekennzeichnet, dass** das Widerstandsheizband (14) eine Länge aufweist, die eine spannungslose Auflage des Widerstandsheizbands (14) auf der Stützfläche (9) und der ersten und zweiten Grundfläche (21, 22) ermöglicht.

7. Siegelwerkzeug (1) nach einem der vorhergehenden Ansprüche, **dadurch gekennzeichnet, dass** ein zweites Werkzeugteil (32) gegenüberliegend zum ersten Werkzeugteil (2) angeordnet ist, das in gleicher Weise wie das erste Werkzeugteil (2) ausgebildet ist und das mit dem ersten Werkzeugteil (2) einen größenvariablen Siegelspalt (33) ausbildet.

8. Siegelwerkzeug (1) nach Anspruch 7, **dadurch gekennzeichnet, dass** ein minimaler Abstand (34) zwischen den Siegelflächen (24) der gegenüberliegen Siegelwerkzeuge (2, 32) einer Dicke einer Siegelnaht (46, 47, 48) für zwei miteinander verbundene Kunststofffolienlagen (43, 44) einer Batteriezelle (41) entspricht und dass ein minimaler Abstand (35) zwischen den mit der Ausgleichsschicht (23) versehenen Grundflächen (21, 22) der Vertiefungen (17, 18) der gegenüberliegenden Siegelwerkzeuge (2, 32) einer Dicke einer Siegelnaht (49) entspricht, in der zwischen zwei Kunststofffolienlagen (43, 44) eine, insbesondere mit einer Kunststoffummantelung (55, 56) versehene, elektrisch leitende Elektrode (53, 54) aufgenommen ist.

9. Siegelwerkzeug (1) nach einem der vorhergehenden Ansprüche, **dadurch gekennzeichnet, dass** der Grundkörper (3), die Ausgleichsschicht (23) und das Widerstandsheizband (14) für eine Durchführung eines Impulssiegelverfahrens ausgebildet sind.

10. Batteriezelle (41) mit einer Batteriezellenhülle (42), die eine erste Kunststofffolienlage (43) und eine zweite Kunststofffolienlage (44) aufweist, wobei die erste Kunststofffolienlage (43) und die zweite Kunststofffolienlage (44) im Bereich einer randseitig umlaufenden Siegelnaht (45) zu einer geschlossenen Tasche verschweißt sind und wobei die Siegelnaht (45) von zwei zwischen der ersten Kunststofffolienlage (43) und der zweiten Kunststofffolienlage (44) angeordneten Elektroden (53, 54) durchsetzt ist, die jeweils als elektrisch leitende Bandabschnitte ausgebildet sind, **dadurch gekennzeichnet, dass** eine erste Schichtdicke (60) der ersten Kunststofffolienlage (43) und eine Schichtdicke (61) der zweiten Kunststofffolienlage (44) längs der Siegelnaht (45) konstant sind.
